Europäisches Patentamt

European Patent Office

Office européen des brevets

(19)

(11) Numéro de publication : **0 069 014**
**B1**

(12) **FASCICULE DE BREVET EUROPÉEN**

(45) Date de publication du fascicule du brevet :
03.04.85

(51) Int. Cl.⁴ : **A 23 J 3/02**, A 23 J 1/20, A 23 C 19/028

(21) Numéro de dépôt : **82401156.3**

(22) Date de dépôt : **23.06.82**

(54) **Procédé de remise en suspension de la caséine floculée du lait en vue de l'obtention d'une matière première laitière enrichie en protéines, applications, notamment en fromagerie, et produits obtenus.**

(30) Priorité : 25.06.81 FR 8112523

(43) Date de publication de la demande :
05.01.83 Bulletin 83/01

(45) Mention de la délivrance du brevet :
03.04.85 Bulletin 85/14

(84) Etats contractants désignés :
**AT BE CH DE FR GB IT LI LU NL SE**

(56) Documents cités :
FR-A- 2 367 430
FR-A- 2 407 674
CHEMICAL ABSTRACTS, vol. 84, no. 11, 15 mars 1976, page 327, no. 72720s, Columbus Ohio (USA); A. KOZHEV et al.: "Production of curd with complete utilization of the milk protein"

(73) Titulaire : **CENTRALE LAITIERE DE HAUTE NOR-MANDIE**
**51, rue Berrubé B.P. 9**
**F-76150 Maromme (FR)**

**Montigny, Jean**
**Folleville**
**F-45580 St Hilaire St Mesmin (FR)**

(72) Inventeur : **Montigny, Jean**
**Folleville**
**F-45580 St Hilaire St Mesmin (FR)**

(74) Mandataire : **Phélip, Bruno et al**
c/o Cabinet Harlé & Phélip 21, rue de la Rochefoucauld
**F-75009 Paris (FR)**

## Description

L'invention concerne le domaine de la technique laitière. Elle a pour objet un procédé de remise en suspension de la caséine floculée du lait en vue de l'obtention d'une matière première laitière enrichie en protéines. Une telle matière peut trouver des applications, spécialement pour la production de fromages, mais aussi pour l'obtention de produits à usage alimentaire ou diététique, tels que des poudres de lait enrichies en substances protéiques. Le domaine dans lequel l'invention trouve une application particulièrement avantageuse est celui de la fromagerie.

La caséine est la principale protéine du lait. Sensible à l'acidité et à la présure, elle représente près des 4/5èmes des matières protéiques qui y sont contenues. Les autres substances protéiques, appelées « protéines du sérum » ou « protéines sériques », sensibles à celle de la chaleur, constituent un peu plus du 1/5ème restant.

Les procédés mis en œuvre pour la séparation des protéines du lait se sont perfectionnés dans le temps, en vue d'en récupérer une proportion toujours plus importante et aussi peu dénaturée que possible. Au procédé rudimentaire mais aussi économique, est venue s'ajouter la technique dite des co-précipités.

Parmi les procédés les plus récents de traitement du lait, on a proposé l'ultrafiltration en vue d'obtenir un rétentat pouvant constituer un pré-fromage, c'est-à-dire une matière première dont la composition correspond très sensiblement à celle du fromage égoutté. Un tel rétentat contient toutes les protéines du lait initial à l'état non dénaturé, lesdites protéines n'ayant subi aucune floculation. L'ultrafiltration, indépendamment du caractère cyclique de son fonctionnement, ne permet pas d'assurer la maîtrise complète de la composition du rétentat, du fait de sa non-instantanéité qui laisse place à l'évolution du produit soumis à la filtration. En outre, sur un plan technologique, la récupération des protéines sériques à l'état soluble, pour souhaitable qu'elle soit pour certaines utilisations, peut s'avérer contre-indiquée en fromagerie, par exemple, où, restant à l'état de solution, ces protéines apportent de la fluidité et non de la fermeté. Sur le plan technologique, l'ultrafiltration est une technique douce mais coûteuse. Dans la pratique, il faut veiller à utiliser des membranes offrant des garanties suffisantes de solidité, de durée de vie et d'aptitude au nettoyage sans subir des détériorations. Dans l'état actuel de la technique, l'ultrafiltration du lait, en vue de la production de fromages, constitue un procédé très intéressant sur le plan théorique mais qui peut donner lieu à des difficultés pratiques de mise en œuvre.

Parmi les procédés connus, on peut également citer le procédé dénommé CENTRI-WHEY développé par la Société ALFA LAVAL, qui consiste à floculer les protéines du sérum en l'absence de caséine, c'est-à-dire dans le sérum lui-même, et après les avoir séparées par centrifugation à incorporer ces protéines floculées dans le lait des fabrications suivantes de fromages. Les protéines du sérum sont coagulées par la chaleur et sont présentes sous forme d'une suspension suffisamment stable pour ne pas déposer durant l'emprésurage. Le procédé conduit donc à un concentré protéique de lait dans lequel la caséine se trouve à l'état de dispersion colloïdale, et qui contient les protéines sériques à l'état floculé. Sur le plan diététique, les nutritionistes estiment qu'il n'y a aucun inconvénient, bien au contraire, à consommer les protéines sériques à l'état coagulé plutôt qu'à l'état soluble. Pour intéressant qu'il soit au point de vue diététique aussi bien qu'économique, le procédé CENTRI-WHEY ne conduit pas à une matière première laitière constituant un véritable pré-fromage. Le lait de protéines résultant de la floculation des protéines du sérum est incorporé au lait de fabrication, ce qui donne lieu à une nouvelle synérèse, qui permet de poursuivre la mise en œuvre du procédé.

La présente invention a pour but d'éliminer la plupart des inconvénients des procédés de la technique antérieure, même les plus récents, tels qu'ils sont utilisés en particulier pour la production fromagère. Ainsi, tout en respectant entièrement les données de la tradition fromagère, le procédé permet d'obtenir une matière première laitière utilisable à titre de pré-fromage, dont la composition est parfaitement bien ajustée aux besoins. A cet égard, l'invention a aussi pour objet un procédé pour l'obtention d'une matière première laitière, utilisable en fromagerie, dans laquelle la teneur en substances minérales, également appelée taux de minéralisation peut être ajustée de manière précise. Le procédé de l'invention peut être mis en œuvre en continu et il fait appel à des matériels déjà utilisés en laiterie. Ainsi qu'il a été dit précédemment, le domaine préféré d'application est celui de la production fromagère, le procédé, par remise en suspension de la caséine, fournissant une matière première laitière sensible à la coagulation par la présure. Toutefois le procédé de l'invention n'est pas limité aux applications fromagères, ladite matière première pouvant être utilisée à des fins alimentaires ou diététiques, par exemple pour la fabrication de produits pouvant être déshydratés, qui sont enrichis en matières protéiques provenant du lait.

Sous sa forme la plus générale, l'invention a pour objet un procédé de remise en suspension de la caséine floculée du lait en vue de l'obtention d'une matière première laitière enrichie en protéines, caractérisé en ce qu'on soumet le lait à un traitement combiné d'acidification et de chauffage dans des conditions fournissant un sérum et un floculé protéique (ou caillé), constitué de caséine et/ou des protéines sériques en ce qu'on sépare, après refroidissement, le caillé et le sérum, ce dernier ne contenant pratiquement pas de protéines du lait, alors que le caillé contient pratiquement toutes les protéines du lait à l'état floculé, en ce qu'on soumet le caillé à un traitement de « frigi-compression »

2

combinant une compression à une pression supérieure à 100 bars et un refroidissement à une température comprise entre 0 et 5 °C, ce qui conduit à un produit liquide concentré en protéines, dans lequel la caséine est remise en suspension.

Le procédé de l'invention est applicable aux laits les plus divers, quelle qu'en soit la nature ou l'origine. Il peut s'agir aussi bien de lait entier ou écrémé, de lait naturel ou reconstitué, en particulier après réhydratation de poudre de lait. On peut mettre en œuvre des laits provenant de toutes les femelles laitières, vaches, chèvres, brebis, bufflesses, ânesses et similaires. Le lait de départ peut avoir subi un traitement préalable d'homogénéisation ou un traitement thermique. On peut ainsi faire appel à des laits pasteurisés ou des laits UHT (ultra haute température).

La première étape du procédé de l'invention consiste à soumettre le lait à un traitement combiné d'acidification et de chauffage. Les conditions de ce traitement diffèrent car il y a corrélation entre l'acidité du milieu et la température. Ainsi la température permettant la floculation des protéines peut varier entre 55 et 120 °C environ sous la pression normale, selon l'acidité du lait (c'est-à-dire à des pH compris entre 4,5 et 6,3 environ). Par exemple à un pH voisin de 6, une température de 80 °C convient. Le chauffage, s'il est réalisé avantageusement à la pression normale, peut également être mis en œuvre sous pression. Les températures supérieures à 95 °C sont donc envisageables.

La différence de comportement de la caséine suivant qu'elle est douce ou acide, est que les protéines sériques peuvent être, ou ne pas être, coagulées par la chaleur, selon la température du chauffage. Avec une caséine douce, on peut chauffer jusqu'à 120 °C sans inconvénient pendant plusieurs minutes, de sorte que les protéines sériques peuvent floculer en même temps que la caséine en prolongeant le maintien à température élevée, et être récupérées à l'occasion de la même décantation centrifuge. Le dépôt obtenu est enrichi en protéines et en calcium par rapport au lait mis en œuvre. A titre d'exemple, à pH 6, le sérum extrait lors de la décantation dose approximativement 2 à 3 g/l de protéines, 0,5 à 0,6 g/l de calcium et moins de 60 g/l d'extrait sec.

Avec un lait acide, il n'est pas possible de chauffer de façon prolongée, à haute température, donc de récupérer en même temps les protéines sériques et la caséine. Le dépôt récupéré par décantation est privé des protéines du sérum et non enrichi en calcium, son taux étant celui du lait utilisé, à la différence d'extrait sec près. A titre d'exemple, à pH 4,6, le sérum séparé dose 7 à 8 g/l de protéines, 1,2 g/l de calcium et environ 62 à 63 g/l d'extrait sec. C'est la raison pour laquelle il convient, dans ce cas, de procéder à un chauffage prolongé. Ce chauffage peut être appliqué, soit au lait avant acidification, soit au sérum, après extraction de la caséine. Dans ce cas, on centrifuge le sérum, après floculation, et on sépare un lait qui peut être ajouté au concentré de caséine. Le traitement combiné d'acidification et de chauffage selon l'invention peut donc comporter, dans le cas d'un lait acide, un premier chauffage permettant de récupérer un concentré protéique essentiellement à base de caséine, et un deuxième chauffage, sur le sérum séparé, qui permet de récupérer les protéines sériques, lesquelles sont ensuite ajoutées au premier concentré protéique.

Alors que la préparation d'un concentré protéique de lait doux ne requiert qu'une décanteuse à convoyeur, celle d'un concentré de lait acide exige en plus un clarificateur qui assure la récupération des protéines sériques. Pratiquement, si l'on dispose des deux matériels de centrifugation — décanteuse et clarificateur — on peut adopter la même technique, que le lait mis en œuvre soit doux ou acide.

Mais, en variante, la récupération des protéines sériques peut être obtenue aussi en suivant une technique différente qui permet de séparer un sérum présentant un extrait sec acceptable, par exemple voisin de 57 à 58 g/l et une teneur en matière azotée totale faible, par exemple comprise entre 2 et 3 g/l, en réalisant la floculation des protéines sériques dans le lait mis en œuvre, avant son acidification, c'est-à-dire lors de sa pasteurisation. La température du lait est portée à 90-95 °C ou même davantage et maintenue un temps suffisant par exemple 3 à 5 mn. A la faveur de ce chauffage, les protéines sériques floculent dans des conditions telles qu'elles affectent, par la suite, après refroidissement, acidification et nouveau réchauffement, les conditions dans lesquelles la caséine flocule à son tour. En effet, les grains de caséine qui se forment sont alors plus petits, plus réguliers que ceux qui apparaissent sur un lait n'ayant pas subi un chauffage et un chambrage à température élevée. La floculation de la caséine provoque alors un collage des particules plus fines des protéines sériques.

Comme on le voit, la température et la durée du chauffage doivent être dégressives en fonction de l'acidité du lait, afin d'obtenir un grain de caséine dont la fermeté permet tout à la fois une décantation centrifuge aisée et une remise correcte en suspension dans des étapes ultérieures du procédé.

Les matériels utilisés pour la mise en œuvre du procédé de l'invention peuvent être de nature quelconque, et varient en fonction de la température du chauffage. Pour des températures de chauffage inférieures ou égales à 80 °C environ, des échangeurs classiques suffisent. Pour élever la température au-dessus de 80 °C environ, divers moyens complémentaires tels qu'une injection de vapeur d'eau sont possibles. Lorsqu'il s'agit d'élever la température d'un lait déjà coagulé à la température ordinaire c'est-à-dire présentant un pH inférieur à 4,8, il ne se pose pratiquement pas de problème, le salissement des parois chauffantes étant insignifiant si l'on adopte à la fois une vitesse de circulation importante et un écart très faible de température entre l'eau de chauffage et le lait floculé. Par contre, lorsque le chauffage concerne un lait qui n'est pas floculé à la température ordinaire (25 °C, par exemple), les appareils de chauffage commencent à s'encrasser quelques degrés en dessous de la température de floculation. C'est la raison pour laquelle tous les systèmes de chauffage s'adressant à un liquide susceptible de floculer lors de la montée en température, comportent en fin de traitement une injection de vapeur. Cette méthode présente sans doute l'inconcénient, en introduisant de la vapeur, d'apporter de l'eau condensée et ainsi de diluer le lait ou le sérum mis en œuvre, opération inopportune quand il s'agit par la suite, de sécher les produits séparés, ou contre-indiquée, dans le cas d'une production fromagère puisque, mises à part les pâtes lavées, on risque de s'éloigner des caractéristiques de la fabrication traditionnelle considérée. Cependant, l'utilisation d'échangeurs de température à hautes performances (85 % de récupération) réduit la dilution à un taux suffisamment faible.

Il peut être avantageux d'éviter tant le salissement des parois chauffantes que la dilution du lait ou du sérum mis en œuvre. A cet effet, il est prévu, selon l'invention, pour gagner les dix ou vingt derniers degrés permettant d'atteindre la température de floculation, de faire appel à un appareil échangeur dans lequel le lait s'écoule, sous une faible épaisseur, par exemple 0,5 m/m, à une très grande vitesse, 7 à 20 m/s. Un balayage de la surface chauffante est ainsi réalisé. La formation d'un dépôt préjudiciable au maintien des échanges thermiques est de la sorte évitée. Cet objectif est atteint en faisant circuler le lait déjà réchauffé à l'aide d'un échangeur, dans plusieurs éléments comportant chacun un disque tournant à grande vitesse, par exemple 2 800 t/mn, et une surface chauffante fixe, également circulaire et très peu distante du disque en rotation.

Les moyens à mettre en œuvre pour réaliser l'acidification dans la première étape du procédé de l'invention, sont à la portée de l'homme de l'art et dépendent uniquement du pH à obtenir. Dans le cas où une acidification limitée est désirée, c'est-à-dire en vue de la préparation de concentré de protéines de lait doux, on peut recourir à une addition d'acide, par exemple d'acide chlorhydrique alimentaire ou d'acide lactique. Il est, bien entendu, également possible de procéder à une fermentation lactique. Pour atteindre des degrés plus élevés d'acidité, la fermentation lactique est préférée. D'une manière générale, lorsqu'il s'agit de préparer une matière première destinée à la production fromagère, il est préférable de réaliser l'acidité recherchée grâce à une fermentation lactique.

Selon une caractéristique très importante du procédé de l'invention, le réglage du pH du lait, au départ du procédé, permet d'ajuster la teneur en substances minérales, particulièrement en calcium, c'est-à-dire le taux de minéralisation de la matière première laitière finalement obtenue. Cette caractéristique présente une importance décisive lors de la production fromagère. La deuxième étape du procédé, outre une remise en suspension de la caséine, exerce une fonction de concentration du volume. On illustrera maintenant par des considérations chiffrées, les possibilités de réglage du taux de minéralisation. On supposera dans ce qui suit qu'on part d'un lait titrant 1,2 g de calcium par litre et contenant 90 g d'extrait sec.

Si l'acidification d'un tel lait est effectuée à pH 6, le sérum qui s'écoule titrera environ 0,5 g de calcium par litre. Si le procédé de l'invention procure un effet de concentration de l'ordre de 6, l'extrait sec dans la matière première laitière obtenue représente la différence de 540 g/l et de l'extrait sec correspondant à 5 volumes de sérum à 58 g d'extrait sec environ, soit 540-290 = 250 g/l. Quant à la teneur en calcium, la teneur totale serait de 7,2 g de calcium par litre et la teneur dans le sérum de 5 × 0,5 = 2,5 g de calcium par litre, de sorte que la teneur en calcium dans la matière première laitière finalement obtenue est de 4,7 g de calcium par litre.

Si le même lait de départ est acidifié à un pH de 5,4, le sérum contiendra environ 0,9 g de calcium par litre. En adoptant la même concentration de 6, la teneur totale en calcium est de 6 × 1,2 = 7,2 g de calcium par litre, alors que dans le sérum cette teneur est de 5 × 0,9 = 4,5 g de calcium par litre. Finalement, la teneur en calcium dans la matière première laitière obtenue est de 2,7 g de calcium par litre. On rappellera à ce propos que dans des fromages pâte molle du type camembert, la teneur en calcium est de l'ordre de 1 à 3 g par litre.

Si le même lait de départ est acidifié à un pH de 4,6, le sérum contiendra environ 1,2 g de calcium par litre, par exemple. Toujours avec une teneur totale de 7,2 g de calcium par litre, le sérum contenant 5 × 1,2 = 6 g de calcium par litre on obtiendra dans la matière première laitière finale une teneur en calcium de 1,2 g/l.

On voit donc que le procédé de l'invention permet à la fois de maîtriser la floculation des protéines du lait, y compris les protéines sériques, et de régler le taux de minéralisation que l'on désire obtenir dans la matière première laitière. Un tel procédé est donc parfaitement adapté à la production fromagère.

Une conséquence avantageuse du traitement combiné d'acidification et de chauffage est une stabilisation de la matière qui subit les opérations ultérieures de traitement. En effet, le chauffage inhibe ou détruit les germes lactiques, de sorte que l'acidité totale ou réelle ne varie pas pratiquement dans la suite des opérations. On constate seulement une légère diminution de l'acidité totale et une remontée du pH. Contrairement à l'ultrafiltration le procédé de l'invention traite donc une matière qui reste stable pendant toutes ces opérations.

Après la première étape du procédé — acidification et chauffage — le procédé de l'invention implique un refroidissement et une séparation consécutive du sérum et du floculé protéique. Ainsi qu'on l'a dit précédemment, cette séparation peut s'effectuer par tout moyen technique connu à la portée de l'homme de l'art, tel que centrifugation, décantation et/ou clarification.

La dernière étape du procédé de l'invention consiste en un traitement de « frigi-compression ». Un tel traitement, qui est effectué sur le caillé, ou floculé protéique, combine une compression à une pression supérieure à 100 bars et un refroidissement à une température comprise entre 0 et 5 °C.

Dans la première étape du procédé, la floculation acide de la caséine, par fermentation lactique ou addition d'acide, s'accompagne d'un phénomène de déshydratation des micelles de caséine, la synérèse. Dans les conditions de température utilisées au cours de cette première étape, la synérèse est pratiquement instantanée. Toutefois, le degré d'acidité du lait conditionne, ainsi qu'on l'a dit précédemment, la température à laquelle se produit la floculation et exerce aussi une influence sur la vitesse à laquelle se développe la synérèse.

Dans la dernière étape du procédé, l'invention tire profit du fait que la synérèse présente, au moins dans une première phase, un caractère réversible, de sorte qu'il est possible de réhydrater les micelles de caséine et de leur faire retrouver ainsi l'état de dispersion colloïdale qui était le leur avant la floculation.

Cette remise en suspension de la caséine est réalisée conformément à l'invention par un traitement combinant la réfrigération et les hautes pressions, et qui permet vraisemblablement au liquide intermicellaire d'exercer une pression sur les micelles et de favoriser ainsi leur pénétration par les molécules d'eau.

Le degré de déshydratation consécutif à la synérèse est fonction de l'action conjuguée de la température et de l'acidité, ainsi d'ailleurs que de l'agitation. Alors que la floculation et la synérèse n'apparaissent qu'à une température élevée, 75 à 80 °C, pour un lait accusant une acidité limitée, 26 °D ou pH 6,00, ce phénomène se développe à une température beaucoup plus basse, 20 °C, pour un lait présentant une acidité très élevée, 78 °D ou pH 4,60, donc voisin du point isoélectrique de la caséine. A contrario, un lait faiblement acide, 23 °D ou pH 6,20, flocule à une température élevée. La synérèse, faible à basse température, ne se développe qu'avec la chaleur et l'agitation.

Dans les trois cas, la caséine acquiert une texture granuleuse propice à sa séparation. Celle-ci s'opère naturellement en une ou plusieurs heures ou rapidement en faisant appel à la force centrifuge.

Il est aussi opportun de retenir, qu'à faible acidité, malgré une température élevée, le maintien de celle-ci pendant une dizaine, voire une vingtaine de minutes, n'apporte pas d'inconvénients majeurs, alors qu'à une acidité élevée, la rapidité de montée en température et le temps de maintien avant refroidissement également rapide, ont une influence déterminante sur la réversibilité de la floculation.

Le retour à l'état colloïdal de la caséine floculée et légèrement déshydratée, est d'autant plus facile que la caséine mise en œuvre est douce, c'est-à-dire éloignée, quant à sa réaction, de la zone d'acidité où elle reste à l'état floculé quelle que soit la basse température ou la pression appliquée par la suite, pratiquement en dessous de pH 4,50.

On notera que la consistance de la caillebotte est d'autant plus grande que son extrait sec est important et son acidité élevée, deux caractéristiques engendrant, au cours de la frigi-compression, la formation d'états intermédiaires d'une viscosité considérable.

Le traitement de compression prévu par l'invention exerce un effet mécanique sur le produit, qui a pour effet de réincorporer l'eau aux micelles floculées de caséine. Cette compression peut être réalisée par tout moyen approprié, par exemple par pompage.

La dispersion de la caséine floculée est d'autant plus malaisée que sa concentration est grande et que sa réaction est acide. A son point isoélectrique, cette dispersion est plus difficile et cette difficulté se trouve renforcée par la présence d'air qui, du fait de la viscosité du produit, se sépare mal. En effet, la présence de l'air déstabilise la dispersion colloïdale de la caséine. Il est aisé de s'en rendre compte en observant la mousse qui peut se former à la surface d'un lait écrémé à pH 4,60, maintenu à une température inférieure à 5 °C, dans une enceinte présentant également une température inférieure à 5 °C, lorsqu'on l'agite sans précaution. Alors que le lait observé par transparence, montre une homogénéité parfaite, le film des bulles qui se forment en surface, recèle la présence de grumeaux de caséine. Pour cette raison, l'existence de bulles d'air dans la caillebotte en voie de liquéfaction, empêche celle-ci de parvenir à son temps ou en gêne le déroulement et ce, d'autant plus que sa viscosité est considérable.

Il est donc recommandé de procéder à un débullage que la simple mise sous vide ne permet pas d'obtenir. Pour expulser radicalement l'air occlus, il convient de compléter l'action du vide par celle de la force centrifuge.

A cet effet, la caillebotte ayant subi de préférence un bref refroidissement, qui la ramollit, est par exemple amenée à l'entrée d'un cylindre présentant un diamètre de 100 m/m, une longueur de 800 m/m et tournant à près de 1 500 t/mn. Ce cylindre, disposé à l'intérieur d'une enceinte placée sous vide, est traversé par la caillebotte, laquelle est plaquée par la force centrifuge sur sa paroi intérieure. Au cours de son déplacement transversal dans le cylindre en rotation, ralenti dans son avancement vers l'autre extrémité par un dispositif approprié — spire fixée à la paroi intérieure, séparations à intervalle régulier, munies d'ouies — la caillebotte abandonne l'air occlus, puis est projetée dans l'enceinte. Elle tombe alors vers la partie inférieure d'où elle est extraite par une pompe. Elle présente alors une viscosité nettement plus faible qu'à son entrée dans l'appareil de débullage.

L'élimination d'air, ou débullage, préalablement à la frigi-compression, représente une étape préférée de l'invention. Elle se réalise par action conjointe du vide et d'un effet mécanique, notamment de la force centrifuge, sur le caillé en cours de manipulation.

La réfrigération à une température comprise entre 0 et 5 °C n'impose pas de moyen particulier. Il suffit de faire passer le caillé en échange avec un fluide de refroidissement, par exemple de l'eau glacée.

Il va sans dire que les indications ci-dessus concernant les matériels et moyens à utiliser pour la mise

en œuvre du procédé de l'invention, ne sont données qu'à titre indicatif et pour l'enseignement de l'homme de l'art. Celui-ci peut faire appel à tout autre moyen équivalent. Selon une caractéristique avantageuse, l'invention peut être réalisée en continu et en utilisant des matériels simples, déjà connus dans la laiterie et la fromagerie traditionnelles. En outre, lors du traitement de frigi-compression, le volume de la matière première est notablement réduit par rapport à celui du lait de départ, ce qui n'entraîne pas une dépense d'énergie excessive malgré les hautes pressions nécessaires à la dernière étape du traitement.

Le procédé de l'invention trouve une application particulièrement intéressante dans la production fromagère. Il permet en effet, ainsi qu'on la dit précédemment, de maîtriser d'une manière très exacte le taux de minéralisation de la matière première. Celle-ci contient toutes les protéines initiales du lait, une fois que celles-ci ont été floculées, et représente un pré-fromage capable de fournir des fromages en tous points conformes aux produits traditionnels. L'invention conserve intégralement l'aptitude à la coagulation de la caséine par la présure. En effet, dans la matière première laitière obtenue à l'issue du procédé, la caséine retrouve l'état de suspension colloïdale qu'elle possédait dans le lait de départ.

La matière première laitière selon l'invention peut avantageusement être utilisée comme pré-fromage. En ajoutant de la présure, et après un réglage approprié des taux de matière grasse et autres composants secondaires mis en œuvre de manière habituelle dans la production fromagère, la matière première de l'invention est transformée en fromages sans synérèse. Les fromages obtenus, par exemple à pâte fraîche, molle ou pressée, présentent les propriétés organoleptiques des fromages habituels car leur teneur en substances minérales est essentiellement la même.

La matière première laitière selon l'invention peut aussi être utilisée dans le domaine alimentaire ou diététique, en tant que telle ou en combinaison avec d'autres substances alimentaires pour constituer des boissons lactées, des desserts et autres produits alimentaires. Les produits alimentaires en question peuvent être présents sous forme liquide ou déshydratée. Ils contiennent du lactose, mais pour certains besoins une élimination partielle ou totale du lactose peut être prévue. Bien entendu, la matière première laitière peut être déshydratée.

L'invention sera maintenant illustrée, sans être aucunement limitée, par les exemples ci-après. Dans les exemples on a utilisé les abréviations suivantes :

E.S. extrait sec
MAT matière azotée totale
MG matière grasse
Ca calcium

Exemple 1

Cet exemple illustre la préparation d'une matière première laitière légèrement acidifiée et enrichie en protéines.
Matériel utilisé
— cuve chauffante et refroidissante GUERIN, de 60 l, siphon pour le soutirage du sérum
— broyeur FRYMA
— pompe REGIS 1 R, pour l'alimentation de l'homogénéisateur RANNIE,
— tête d'affinage, type AUGUSTE et DES MOUTIS
— réfrigérant tubulaire à eau glacée
— bac à eau glacée pour la conservation de la caillebotte ou du concentré
— bassines et conches pour les transferts de caillebotte, sérum et concentré.
Lait de départ
— 55 litres de lait partiellement écrémé

| | |
|---|---|
| E.S. 97,1 g/l | M.G. 15,0 g/l |
| M.A.T. 32,8 g/l | Ca 1,12 g/l |
| acidité 16°5 D | pH 6,604 |

On a d'abord procédé à un chauffage du lait à 92 °C, et on a maintenu cette température 5 mn, après quoi on a refroidi jusqu'à 11 °C.

En vue de l'acidification, on a effectué à 11 °C une addition de 220 ml d'acide chlorhydrique 3N aux 55 litres de lait, agités vigoureusement, l'acidité atteint 26 °5D, correspondant à un pH de 5,895. Après cinq minutes, on a chauffé avec agitation jusqu'à 93 °C — la floculation apparaît à 70 °C — on a maintenu la température durant 5 mn, puis on a refroidi jusqu'à 15 °C.

Après avoir arrêté et enlevé l'agitateur, on a mis au repos le lait floculé.

On a procédé ensuite au soutirage du sérum et à la récupération de la caillebotte. Le sérum présentait les caractéristiques suivantes :

| | |
|---|---|
| E.S. 55,6 g/l | M.G. 0,44 g/l |
| M.A.T. 2,79 g/l | Ca 0,46 g/l |
| acidité 15,5 °D | pH 5,930 |

6

**0 069 014**

La caillebotte est disposée dans un sac en « Nylon » et mise au froid. Au bout de cinq heures environ, on a obtenu 14 kg de caillebotte présentant un extrait sec de 22,4 %. La caillebotte est alors additionnée de 3 kg 200 de sérum pour ramener l'extrait sec entre 18 et 19 %, puis introduite dans le broyeur FRYMA, pour la ramollir.

En vue du traitement de frigi-compression, on met en pression la caillebotte sortant du broyeur et véhiculé par la pompe REGIS via l'homogénéisateur RANNIE en la faisant passer à travers une tête d'affinage AUGUSTE et DES MOUTIS. Le produit est refoulé dans un réfrigérant à eau glacée tubulaire qui amène sa température à 3 °C.

On a ainsi obtenu une matière première laitière liquide, concentrée en protéines, présentant les caractéristiques suivantes :

E.S. 19,32 % M.G. 50 g/l M.A.T. 103 g/l
Ca 2,77 g/l pH 6,170

On a réalisé un essai d'emprésurage en prélevant deux échantillons :

échantillon A, 0,5 l de concentré à 30 °C, pas de présure,

échantillon B, 0,5 l de concentré à 30 °C, additionné de 2 gouttes de présure GRANDAY au 1/5 000.

Trois quarts d'heure après l'addition de présure à l'échantillon B, on a obtenu un caillé très ferme, alors que l'échantillon A était toujours liquide.

### Exemple 2

Cet exemple illustre encore la préparation d'une matière première laitière acidifiée partiellement et enrichie en protéines.

Matériel utilisé

identique à celui mis en œuvre dans l'exemple 1.

Lait de départ

55 litres de lait écrémé

| | |
|---|---|
| E.S. | 92,8 g/l |
| M.A.T. | 35,7 g/l |
| acidité | 17°5 D |
| pH | 6,617 |
| Ca | 1,28 g/l |

Le lait a d'abord été chauffé à 80 °C, puis refroidi à 26 °C, après quoi on l'a acidifié par ensemencement avec 12 ml de ferments lactiques concentrés et congelés.

La fermentation s'est développée comme suit :

| Temps écoulé après ensemencement | acidité | pH |
|---|---|---|
| 45 mn | 17°5 D | 6,617 |
| 8 heures | 25°D | 6,121 |
| 12 heures | 48°D | 5,300 |

La floculation est réalisée par chauffage à 70 °C, 30 s la coagulation est constatée vers 30 °C. On refroidit ensuite à 11 °C. Après agitation, en vue de la décantation, on arrête et enlève l'agitateur, puis on met au repos le lait floculé. On procède ensuite comme dans l'exemple 1, au siphonnage du sérum et à la récupération de la caillebotte. Le sérum soutiré présentait les caractéristiques suivantes :

| | |
|---|---|
| E.S. | 64,4 g/l |
| M.A.T. | 7,5 g/l |
| acidité | 33 °D |
| pH | 5,307 |
| Ca | 0,96 g/l |

La caillebotte récupérée est mise en sac et placée au froid, soit

10 kg de caillebotte E.S. 22,09 %
pH 5,423

Pour la suite du traitement, la caillebotte est additionnée de 1 litre de sérum puis introduite dans le broyeur FRYMA pour transformer la pâte en un liquide visqueux.

En vue du traitement de frigi-compression on opère comme dans l'exemple 1 et on travaille sous 210 bars à 5 °C ; après une heure, on met au repos le concentré obtenu pour éliminer les bulles d'air en

7

# 0 069 014

suspension ; une couche de mousse importante se forme en surface. Les caractéristiques du concentré sont :

| | |
|---|---|
| E.S. | 20,22 % |
| M.A.T. | 135,0 g/l |
| pH | 5,380 |
| Ca | 2,38 g/l |

Pour l'essai d'emprésurage on prélève deux échantillons :
échantillon D1 : 0,5 l 15 °C, pas de présure
échantillon D2 : 0,5 l 15 °C, 2 gouttes de présure au 1/5 000
Deux heures après l'emprésurage, l'échantillon D1 est toujours liquide, avec de la mousse en surface, et n'est pas pris, tandis que l'échantillon D2 est pris, mais le caillé est rempli de bulles d'air. Cet exemple 2 montre que, dans de nombreux cas, un débullage préalable est utile.

## Exemple 3

Matériel utilisé
identique à celui mis en œuvre dans les exemples 1 et 2.
Lait de départ
55 litres de lait écrémé :

| | |
|---|---|
| E.S. | 92,8 g/l |
| M.A.T. | 36,2 g/l |
| acidité | 17°5 D |
| pH | 6,626 |
| Ca | 1,26 g/l |

Le lait a d'abord été chauffé à 94 °C pendant 10 mn puis refroidi à 26 °C ; après quoi on a acidifié par ensemencement avec 12 ml de ferments lactiques concentrés et congelés. La fermentation s'est développée comme suit :

| Temps écoulé après ensemencement | acidité | pH |
|---|---|---|
| 30 mn | 17°5 D | 6,626 |
| 9,5 heures | 40° D | 5,493 |
| 15,5 heures | 78°5 D | 4,622 |

La floculation est réalisée par chauffage du lait caillé à 62 °C, pendant 10 s, puis on refroidit immédiatement jusqu'à 20 °C.
La décantation, le soutirage du sérum et la récupération de la caillebotte s'effectuent comme dans les exemples 1 et 2 précédents.
Le sérum présente les caractéristiques suivantes :

| | |
|---|---|
| E.S. | 58,65 g/l |
| M.A.T. | 2,6 g/l |
| acidité | 52 °D |
| pH | 4,653 |
| Ca | 1,20 g/l |

On récupère 12,5 kg de caillebotte dosant :

| | |
|---|---|
| E.S. | 19,28 % |
| pH | 4,575 |

La caillebotte est mise en sac et conservée au froid. En vue de son traitement ultérieur, on la fait passer dans le broyeur FRYMA, de manière à lui donner une consistance sirupeuse.
En vue du traitement de frigi-compression, on reprend la caillebotte ramollie par la pompe REGIS pour alimenter l'homogénéisateur RANNIE. Celui-ci la refoule à la pression de 200 bars, dans le réfrigérant tubulaire à eau glacée. En l'absence de débulleur, on met au repos le concentré obtenu, à 3 °C, dans le bac à eau glacée, de manière à ce que les bulles d'air remontent en surface.
Cinq heures après environ, on reprend le concentré, on enlève la mousse qui s'est accumulée en surface et on réalise un second passage dans l'ensemble de frigi-compression, pour obtenir le concentré recherché, dont les caractéristiques sont :

| | |
|---|---:|
| E.S. | 19,28 % |
| pH | 5,587 |
| Ca | 1,20 g/l |

L'essai d'emprésurage est effectué sur deux échantillons maintenus à basse température :
échantillon $C_1$ 0,5 l, 3 °C, pas de présure
échantillon $C_2$ 0,5 l, 3 °C, additionné de 2 gouttes de présure au 1/5 000
Trois heures après emprésurage :
l'échantillon $C_1$ est toujours liquide,
l'échantillon $C_2$ est pris.

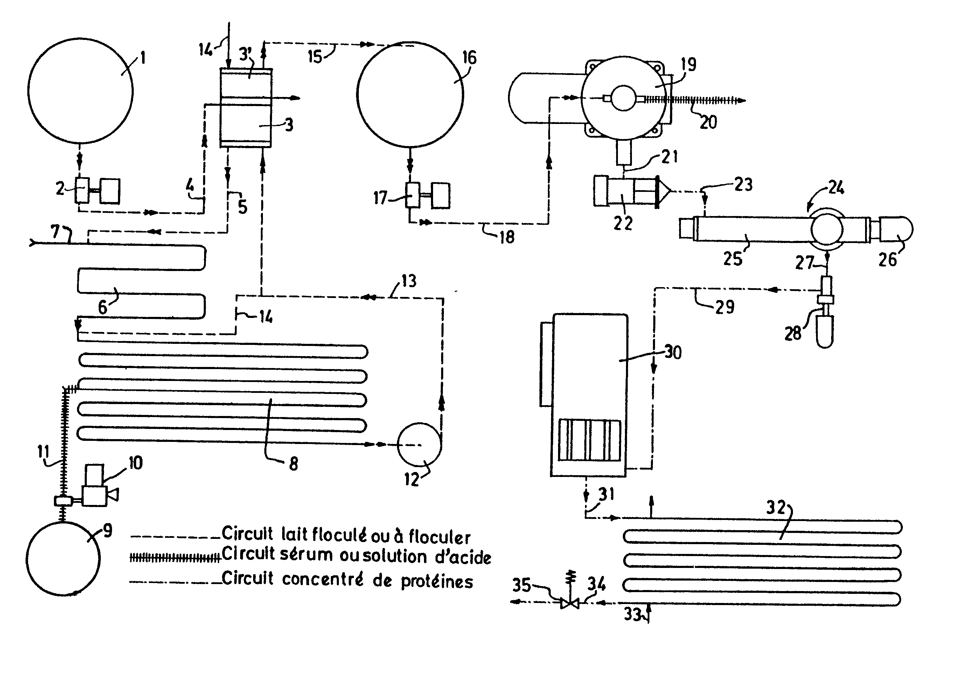

L'invention a été illustrée ci-dessus à l'aide des exemples 1 à 3, qui sont relatifs à des essais effectués de manière discontinue, avec un matériel très simple. On décrira ci-après une installation pour une mise en œuvre continue de l'invention, en référence au dessin annexé. En outre, l'exemple 4 qui suit, illustre une utilisation de l'installation représentée au dessin annexé pour le traitement d'une quantité voisine d'environ 1 000 litres/heure de lait.

L'installation représentée au dessin, est prévue pour la préparation de concentrés de protéines de lait. Le dessin se présente comme une vue de dessus générale de l'installation. Celle-ci comporte une cuve (1) destinée à recevoir le lait de départ. Une pompe (2) introduit le lait de la cuve (1) dans un échangeur (3) à travers la ligne (4). A la sortie de l'échangeur (3), le lait réchauffé passe dans la ligne (5) et parvient à un floculateur (6). Celui-ci reçoit une injection de vapeur (7). Au floculateur (6) fait suite un dispositif (8) dénommé chambreur, qui a pour fonction de régler et de compléter, si nécessaire, la floculation pratiquée par l'injection de vapeur. Dans un point intermédiaire du trajet que parcourt le lait floculé dans le chambreur (8), on procède à une injection de sérum, ou autres solutions acides notamment d'acide lactique, pour parfaire, si nécessaire, la floculation. A cet effet, une cuve (9) est prévue pour le sérum, ou la solution d'acide lactique, et une pompe doseuse (10) injecte le produit par la ligne (11) dans le lait traversant le chambreur (8).

A la sortie du chambreur (8), le lait floculé est repris par un disperseur (12) et transporté par la ligne (13) jusqu'à l'échangeur (3).

On notera que la partie de l'installation comprenant au moins certains éléments du chambreur (8), la cuve (9) avec la pompe (10) et la conduite (11) ainsi que le disperseur (12), sont omis dans le cas où l'on traite un lait déjà floculé. Conformément à cette variante, le lait de départ est un lait acide ou même déjà floculé. Dans ce cas, le lait ensemencé et acidifié dans la cuve (1) jusqu'à obtention de l'acidité requise, est repris par la pompe (2) et traverse le floculateur (6). Il n'a pas besoin de subir un chambrage poussé dans le chambreur (8), et il peut donc sortir directement du floculateur par la ligne (14), pour rejoindre la conduite (13). On notera aussi que, préalablement à l'ensemencement dans la cuve (1), le lait doit faire l'objet d'une pasteurisation à température élevée. On n'a pas représenté au dessin le pasteurisateur ou stérilisateur, qui est un appareil connu de l'homme de l'art, et qui permet de porter le lait à plus de 100 °C pendant plusieurs minutes. Si on le désire, on peut d'ailleurs utiliser le floculateur (6) de l'installation comme stérilisateur tout à fait au départ de l'opération, lorsqu'on remplit de lait acide la cuve (1).

Quelle que soit la nature du lait de départ, lait acide ou lait doux, les mêmes opérations se poursuivent dans le circuit monté après la ligne (13). Dans celle-ci, le produit se trouve à une température pouvant atteindre 95 à 100 °C, et il est donc avantageusement utilisé dans l'échangeur (3). Après passage dans l'échangeur (3), le produit traverse un échangeur (3') en vue de son refroidissement. Celui-ci reçoit par ailleurs un fluide réfrigérant (14), par exemple de l'eau de puits, pour faire tomber la température du produit à la sortie de l'échangeur (3) dans la ligne (15), à une valeur de l'ordre de 10 à 12 °C. La conduite (15) véhicule le produit dans un bac-tampon (16) ; il est repris par une pompe (17) pour être amené par la conduite (18) sur une centrifugeuse (19) de type connu, dans laquelle le sérum est séparé dans la ligne (20), alors que le concentré de protéines parvient, par la ligne (21), dans un dispositif d'alimentation (22) du type gaveuse à deux vis sans fin. Le concentré de protéines est introduit en (23) dans un dispositif de débullage (24). Celui-ci se présente sous la forme générale d'une enceinte (25) placée sous vide à l'intérieur de laquelle tourne un cylindre entraîné par un moteur (26). Le concentré de protéines passe à l'intérieur du cylindre et, grâce à l'action du vide, toute présence d'air est ainsi éliminée. A la sortie (27) du débulleur (24), le produit est repris par une pompe (28) à haute pression qui le véhicule par la ligne (29) jusqu'à un homogénéisateur (30) dans lequel il subit les forces de pression nécessaires au traitement de frigi-compression. A la sortie (31) de l'homogénéisateur (30), le concentré de protéines passe à travers un réfrigérant (32) alimenté par un liquide de réfrigération (33), tel que de l'eau glycolée.

Au dessin, on a représenté en traits pointillés le circuit parcouru par le lait floculé, ou le lait à floculer. On a représenté sous forme d'un trait avec de petites hachures verticales, le circuit du sérum, ou de la solution d'acide telle que l'acide lactique. Enfin, on a représenté en traits mixtilignes, le circuit du concentré de protéines. Ce dernier est récupéré finalement en 34, sous forme du produit final désiré. La référence (35) désigne un clapet pour le réglage de la pression.

Il va sans dire, qu'on n'a pas représenté au dessin les appareils secondaires habituellement utilisés dans des installations de l'industrie laitière, par exemple des appareils de mesure du débit, des dispositifs d'agitation et autres appareils similaires.

On a noté précédemment que la mise en œuvre du procédé et l'utilisation de l'installation devaient être adaptées à la nature du lait de départ, selon que celui-ci est un lait doux ou un lait acide. On a trouvé également que la pression à laquelle doit être soumis le concentré de protéines lors du traitement de frigi-compression, doit être d'autant plus élevée que le lait de départ est plus acide. En d'autres termes, on a constaté dans la pratique, que pour le traitement d'un lait doux, les pressions à exercer n'étaient pas nécessairement élevées, et par exemple de l'ordre de 100 à 200 bars, alors que pour un lait acide les pressions devaient être plus élevées, et par exemple de l'ordre de 250 à 300 bars.

L'exemple 4 qui suit, est relatif à une application concrète en continu, de l'installation représentée au dessin annexé.

Exemple 4

Dans cet exemple, la cuve (1) est une cuve ALFA LAVAL avec agitateur, ayant une capacité de 250 litres. Le bac-tampon (16) est une cuve CORBLIN, avec agitateur d'une capacité de 200 litres. La cuve (9) avec agitateur a une capacité de 60 litres. La pompe (10) peut débiter 90 litres/heure. La centrifugeuse (19) est du type WESTFALIA KNA3. L'homogénéisateur (30) est du type homogénéisateur RANNIE, d'une capacité de traitement de 200 litres/heure. Une telle installation est capable de traiter 1 000 litres/heure de lait.

Lorsque le lait est doux il est, après avoir été homogénéisé dans la cuve (1) et réchauffé après passage dans l'échangeur (3), introduit dans le floculateur (6) où il est porté à une température de 95 °C à 120 °C durant 2 à 3 minutes. Il passe ensuite dans le chambreur (8) où il est acidifié avec un brassage énergique par injection continue d'acide lactique, ou de sérum acide, provenant de la conduite (11). On constate qu'il se produit successivement la floculation des protéines sériques, puis celle de la caséine. Les protéines sériques, du fait de leur faible concentration, floculent sous la forme d'une poussière très fine. La caséine, en revanche, flocule sous forme de gros flocons qui sont ensuite divisés par agitation, notamment dans le disperseur (12). Le produit véhiculé dans la conduite (13) à une température de l'ordre de 95 à 100 °C, traverse les échangeurs (3, 3'). Le lait, dont les protéines sont floculées, se trouve dans la conduite (15) à une température de l'ordre de 10 °C. Le lait, après passage dans le bac-tampon (16), alimente la centrifugeuse WESTFALIA (19) qui sépare du sérum le concentré de protéines. Celui-ci (21) est repris par la gaveuse (22) pour passer dans le débulleur (24), qui exerce aussi un effet de ramollissement en plus de l'élimination des bulles d'air. L'homogénéisateur (30) travaille ensuite comme une pompe à haute pression. Dans le réfrigérant tubulaire (32), le concentré à haute pression est refroidi jusqu'à une température voisine de 3 °C, ce qui a pour effet de le rendre liquide.

Les indications qui précèdent concernent le traitement d'un lait doux. La pression, lors du traitement de frigicompression, est dans ce cas de 100 à 200 bars.

Les caractéristiques analytiques du lait, du concentré de protéines et du sérum obtenus à l'occasion d'un essai sur lait doux, sont indiquées dans le tableau ci-dessous :

|  | extrait sec | matières protéiques | pH | acidité (°Dornic) |
|---|---|---|---|---|
| lait avant passage dans le floculateur | 8,7 % | 3,33 % | 6,463 | 19° D |
| lait après passage dans le floculateur | 8,12 % | | 5,953 | 26° D |
| concentré de protéines | 12,6 % | 7,2 % | 6,020 | |
| sérum | 5,9 % | 0,31 % | | 16° D |

Ainsi qu'on l'a mentionné précédemment, lorsque le lait soumis à la floculation thermique est acide, et même déjà floculé, il doit préalablement à son ensemencement faire l'objet d'une pasteurisation à température élevée. C'est ce lait pasteurisé qui est introduit dans la cuve (1). Il est alors ensemencé et acidifié, puis dirigé sur le floculateur (6) lequel fonctionne alors comme appareil de chauffage. A la sortie du floculateur, le lait, dans lequel les protéines sont floculées, est introduit via la ligne (14), dans la conduite (13). Le reste du circuit est alors identique à celui décrit précédemment pour le lait doux.

Toutefois, il convient d'utiliser lors du traitement de frigi-compression, des pressions plus élevées, qui peuvent atteindre par exemple 250 à 300 bars.

On notera enfin, que le traitement de débullage peut être important mais qu'il n'est pas, cependant, obligatoire dans tous les cas. Il est donc possible, en variante, d'alimenter directement l'homogénéisateur (30) par la pompe (28) et la ligne (29) à la sortie de la gaveuse (22).

**Revendications** (pour les Etats contractants : BE, CH, DE, FR, GB, IT, LI, LU, NL, SE)

1. Procédé de remise en suspension de la caséine floculée en vue de l'obtention d'une matière première laitière enrichie en protéines, caractérisé en ce qu'on soumet le lait à un traitement combiné d'acidification et de chauffage fournissant un sérum et un floculé protéique (ou caillé), constitué de caséine et/ou des protéines sériques, en ce qu'on sépare, après refroidissement, le caillé et le sérum, ce dernier ne contenant pratiquement pas de protéines du lait, alors que le caillé contient pratiquement toutes les protéines du lait à l'état floculé, en ce qu'on soumet le caillé à un traitement de « frigi-compression » impliquant une compression à une pression supérieure à 100 bars et un refroidissement à une température comprise entre 0 et 5 °C, ce qui conduit à un produit liquide concentré en protéines, dans lequel la caséine est remise en suspension.

2. Procédé selon la revendication 1, caractérisé en ce qu'on utilise un lait de nature ou d'origine quelconque, entier ou écrémé, naturel ou reconstitué, le lait pouvant avoir subi un traitement préalable d'homogénéisation ou un traitement thermique.

3. Procédé selon l'une des revendications 1 ou 2, caractérisé en ce que, dans la première étape du procédé, on réalise la floculation des protéines par chauffage du lait entre 55 et 120 °C, sous pression normale, selon l'acidité du lait, laquelle est comprise entre pH 4,5 et pH 6,3.

4. Procédé selon la revendication 3, caractérisé en ce que la température et la durée du chauffage diminuent lorsque l'acidité du lait augmente.

5. Procédé selon l'une quelconque des revendications 1 à 4, caractérisé en ce qu'avec une caséine douce, on chauffe jusqu'à 120 °C pendant plusieurs minutes, de sorte que les protéines sériques floculent en même temps que la caséine.

6. Procédé selon l'une quelconque des revendications 1 à 4, caractérisé en ce que le traitement combiné d'acidification et de chauffage comporte, dans le cas d'un lait acide, un premier chauffage permettant de récupérer un concentré protéique essentiellement à base de caséine, et un deuxième chauffage, sur le sérum séparé, permettant de récupérer les protéines sériques, lesquelles sont ensuite ajoutées au premier concentré protéique.

7. Procédé selon l'une quelconque des revendications 1 à 4, caractérisé en ce qu'on pratique la floculation des protéines sériques dans le lait mis en œuvre, avant son acidification, en portant sa température à 90-95 °C ou davantage pendant 3 à 5 minutes, après quoi on refroidit, on acidifie et l'on chauffe pour réaliser la floculation de la caséine.

8. Procédé selon l'une quelconque des revendications 1 à 7, caractérisé en ce que, pour effectuer le traitement de chauffage de la première étape à des températures inférieures ou égales à 80 °C, on utilise des échangeurs traditionnels, tandis que pour élever la température au-dessus de 80 °C on fait appel à une injection de vapeur d'eau ou à un appareil échangeur dans lequel le lait s'écoule sous une faible épaisseur et à une très grande vitesse, en particulier dans un ensemble d'éléments comportant chacun un disque tournant à grande vitesse et une surface chauffante fixe, également circulaire et très peu distante du disque en rotation.

9. Procédé selon l'une quelconque des revendications 1 à 8, caractérisé en ce qu'on réalise l'acidification par addition d'acide ou par fermentation lactique.

10. Procédé selon l'une quelconque des revendications 1 à 9, caractérisé en ce qu'on règle la teneur en substances minérales, particulièrement en calcium, du concentré obtenu à la fin du procédé, en laissant se développer l'acidification, avant floculation par chauffage, jusqu'à un pH prédéterminé.

11. Procédé selon l'une quelconque des revendications 1 à 10, caractérisé en ce que le traitement de frigi-compression est réalisé entre 0 et 5 °C dans des conditions de pression exerçant un effet mécanique pour réincorporer de l'eau aux micelles floculées de caséine, assurant ainsi leur réhydratation et les faisant passer à l'état de dispersion colloïdale qui était le leur avant la floculation.

12. Procédé selon la revendication 11, caractérisé en ce que le traitement de frigi-compression est réalisé en faisant circuler le concentré protéique sous pression dans un réfrigérant.

13. Procédé selon l'une des revendications 11 ou 12, caractérisé en ce que la pression exercée sur le concentré de protéine est d'autant plus élevée que le lait de départ est plus acide.

14. Procédé selon l'une quelconque des revendications 1 à 13, caractérisé en ce que avant le traitement de frigi-compression, le concentré protéique subit une préparation préalable comprenant une addition éventuelle de sérum pour réduire son extrait sec, et un ramollissement.

15. Procédé selon l'une quelconque des revendications 1 à 14, caractérisé en ce qu'on soumet complémentairement le concentré protéique, préalablement à la frigi-compression, à une élimination d'air, ou débullage, par actions conjointes du vide et d'un effet mécanique, notamment de la force centrifuge sur le caillé en cours de traitement.

16. Matière première laitière enrichie en protéines, dans laquelle pratiquement toutes les protéines du lait de départ, à l'exception de la caséine, se trouvent à l'état floculé et qui, par addition de présure, se transforme en fromage essentiellement sans synérèse.

17. Matière première selon la revendication 16, présentée sous forme déshydratée.

18. Application de la matière première laitière selon l'une des revendications 16 ou 17, à la production fromagère, selon laquelle ladite matière est transformée en fromage, essentiellement sans synérèse, par simple addition de présure après réglage approprié des taux de matière grasse et autres composants secondaires mis en œuvre de matière habituelle dans la production fromagère.

19. Application selon la revendication 18, dans laquelle on maîtrise, grâce au réglage du pH du lait de départ, le taux de minéralisation, en particulier la teneur en calcium, de la matière première, la caséine de celle-ci conservant l'état de suspension colloïdale qu'elle possédait dans le lait de départ.

20. Application de la matière première laitière selon l'une des revendications 16 ou 17, à titre d'aliment ou de produit diététique.

21. Fromages, en particulier à pâte fraîche, à pâte molle ou pressée, obtenus à partir de la matière première laitière selon l'une des revendications 16 ou 17, et résultant de l'application selon l'une des revendications 18 ou 19.

**Revendications** (pour l'Etat contractant AT)

1. Procédé de remise en suspension de la caséine floculée en vue de l'obtention d'une matière première laitière enrichie en protéines, caractérisé en ce qu'on soumet le lait à un traitement combiné d'acification et de chauffage fournissant un sérum et un floculé protéique (ou caillé), constitué de caséine et/ou des protéines sériques, en ce qu'on sépare, après refroidissement, le caillé et le sérum, ce dernier ne contenant pratiquement pas de protéines du lait, alors que le caillé contient pratiquement toutes les protéines du lait à l'état floculé, en ce qu'on soumet le caillé à un traitement de « frigi-compression » impliquant une compression à une pression supérieure à 100 bars et un refroidissement à une température comprise entre 0 et 5 °C, ce qui conduit à un produit liquide concentré en protéines, dans lequel la caséine est remise en suspension.

2. Procédé selon la revendication 1, caractérisé en ce qu'on utilise un lait de nature ou d'origine quelconque, entier ou écrémé, naturel ou reconstitué, le lait pouvant avoir subi un traitement préalable d'homogénéisation ou un traitement thermique.

3. Procédé selon l'une des revendications 1 ou 2, caractérisé en ce que, dans la première étape du procédé, on réalise la floculation des protéines par chauffage du lait entre 55 et 120 °C, sous pression normale, selon l'acidité du lait, laquelle est comprise entre pH 4,5 et pH 6,3.

4. Procédé selon la revendication 3, caractérisé en ce que la température et la durée du chauffage diminuent lorsque l'acidité du lait augmente.

5. Procédé selon l'une quelconque des revendications 1 à 4, caractérisé en ce qu'avec une caséine douce, on chauffe jusqu'à 120 °C pendant plusieurs minutes, de sorte que les protéines sériques floculent en même temps que la caséine.

6. Procédé selon l'une quelconque des revendications 1 à 4, caractérisé en ce que le traitement combiné d'acidification et de chauffage comporte, dans le cas d'un lait acide, un premier chauffage permettant de récupérer un concentré protéique essentiellement à base de caséine, et un deuxième chauffage, sur le sérum séparé, permettant de récupérer les protéines sériques, lesquelles sont ensuite ajoutées au premier concentré protéique.

7. Procédé selon l'une quelconque des revendications 1 à 4, caractérisé en ce qu'on pratique la floculation des protéines sériques dans le lait mis en œuvre, avant son acidification, en portant sa température à 90-95 °C ou davantage pendant 3 à 5 minutes, après quoi on refroidit, on acidifie et l'on chauffe pour réaliser la floculation de la caséine.

8. Procédé selon l'une quelconque des revendications 1 à 7, caractérisé en ce que, pour effectuer le traitement de chauffage de la première étape à des températures inférieures ou égales à 80 °C, on utilise des échangeurs traditionnels, tandis que pour élever la température au-dessus de 80 °C, on fait appel à une injection de vapeur d'eau ou à un appareil échangeur dans lequel le lait s'écoule sous une faible épaisseur et à une très grande vitesse, en particulier dans un ensemble d'éléments comportant chacun un disque tournant à grande vitesse et une surface chauffante fixe, également circulaire et très peu distante du disque en rotation.

9. Procédé selon l'une quelconque des revendications 1 à 8, caractérisé en ce qu'on réalise l'acidification par addition d'acide ou par fermentation lactique.

10. Procédé selon l'une quelconque des revendications 1 à 9, caractérisé en ce qu'on règle la teneur en substances minérales, particulièrement en calcium, du concentré obtenu à la fin du procédé, en laissant se développer l'acidification, avant floculation par chauffage, jusqu'à un pH prédéterminé.

11. Procédé selon l'une quelconque des revendications 1 à 10, caractérisé en ce que le traitement de frigi-compression est réalisé entre 0 et 5 °C dans des conditions de pression exerçant un effet mécanique pour réincorporer de l'eau aux micelles floculées de caséine, assurant ainsi leur réhydratation et les faisant passer à l'état de dispersion colloïdale qui était le leur avant la floculation.

12. Procédé selon la revendication 11, caractérisé en ce que le traitement de frigi-compression est réalisé en faisant circuler le concentré protéique sous pression dans un réfrigérant.

13. Procédé selon l'une des revendications 11 ou 12, caractérisé en ce que la pression exercée sur le concentré de protéine est d'autant plus élevée que le lait de départ est plus acide.

14. Procédé selon l'une quelconque des revendications 1 à 13, caractérisé en ce que avant le traitement de frigi-compression, le concentré protéique subit une préparation préalable comprenant une addition éventuelle de sérum pour réduire son extrait sec, et un ramollissement.

15. Procédé selon l'une quelconque des revendications 1 à 14, caractérisé en ce qu'on soumet complémentairement le concentré protéique, préalablement à la frigi-compression, à une élimination d'air, ou débullage, par actions conjointes du vide et d'un effet mécanique, notamment de la force centrifuge sur le caillé en cours de traitement.

16. Procédé selon l'une quelconque des revendications 1 à 15, caractérisé en ce qu'on prépare une matière première laitière enrichie en protéines, dans laquelle pratiquement toutes les protéines du lait de départ, à l'exception de la caséine, se trouvent à l'état floculé et qui, par addition de présure, se transforme en fromage essentiellement sans synérèse.

17.. Procédé selon la revendication 16, caractérisé en ce qu'on déshydrate ladite matière première laitière.

18. Procédé de fabrication de fromage, en particulier à pâte fraîche, à pâte molle ou pressée, caractérisé en ce qu'on transforme en fromage la matière première laitière obtenue par le procédé selon l'une quelconque des revendications 1 à 17, ladite transformation étant réalisée essentiellement sans synérèse, par simple addition de présure après réglage approprié des taux de matière grasse et autres composants secondaires mis en œuvre de manière habituelle dans la production fromagère.

19. Procédé selon la revendication 18, caractérisé en ce qu'on maîtrise grâce au réglage du pH du lait de départ le taux de minéralisation, en particulier la teneur en calcium de la matière première, la caséine de celle-ci conservant l'état de suspension colloïdale qu'elle possédait dans le lait de départ, et étant capable de subir la coagulation par la présure.

20. Procédé pour l'obtention d'aliments ou de produits diététiques consistant, à utiliser la matière première laitière obtenue par le procédé selon l'une quelconque des revendications 1 à 19.

**Claims** (for the Contracting States : BE, CH, DE, FR, GB, IT, LI, LU, NL, SE)

1. Process of re-suspending flocculated casein for the obtention of a protein-enriched dairy raw material, characterized in that the milk is subjected to a combined acidifying and heating treatment as to provide a whey and a proteic flocculate (or curd), consisting of casein and/or of seric or whey proteins, in that, after cooling, the curd and whey are separated, the latter containing substantially no milk proteins, while the curd contains substantially all the milk proteins in the flocculated state, in that the curd is subjected to a so-called « frigi-compression » treatment involving a compression step at a pressure exceeding 100 bars and a cooling step to a temperature ranging from 0 to 5 °C, this leading to a liquid protein-concentrated product, wherein the casein is re-suspended.

2. Process according to Claim 1, characterized in that the milk used is of any nature or origin, whole or skimmed, natural or reconstituted, the milk having possibly undergone a previous homogenizing treatment or a heat treatment.

3. Process according to either Claim 1 or 2, characterized in that, in the first step of the method, flocculation of the proteins is effected by heating the milk to about 55-120 °C, under normal pressure, according to the milk acidity, which ranges from pH 4.5 to pH 6.3.

4. Process according to Claims 3, characterized in that the temperature and duration of the heating step decrease as the milk acidity increases.

5. Process according to any of Claims 1 to 4, characterized in that with a mild casein the heating is performed up to 120 °C for a few minutes as to cause concomitant flocculation of the whey proteins and of the casein.

6. Process according to any of Claims 1 to 4, characterized in that the combined acidifying and heating treatment comprises, in the case of an acidic milk, a first heating step affording recovery of a substantially casein-based proteic concentrate, and a second heating step, on the separated whey, affording recovery of the whey proteins, which are subsequently added to the first proteic concentrate.

7. Process according to any of Claims 1 to 4, characterized in that the flocculation of the whey proteins in the milk used is effected, before the acidifying thereof, by raising its temperature to 90-95 °C or more for 3 to 5 minutes, following by cooling, acidifying and heating for causing flocculation of the casein.

8. Process according to any of Claims 1 to 7, characterized in that, for effecting the heating treatment in the first stage at temperatures lower than or equal to about 80 °C, use is made of conventional exchangers, while for raising the temperature above 80 °C, use is made of a steam injection or of an exchanger device wherein the milk will flow under low thickness and at a very high speed, particularly in a set of units each including a disk rotating at high speed and a fixed heating surface also of circular shape and very close to the rotating disk.

9. Process according to any of Claims 1 to 8, characterized in that acidifying is effected by addition of an acid, or by lactic fermentation.

10. Process according to any of Claims 1 to 9, characterized in that the content of mineral substances, especially calcium, in the concentrate obtained at the end of the process is controlled while enabling, previous to the thermic flocculation, the acidification to be raised up to a predetermined pH.

11. Process according to any of Claims 1 to 10, characterized in that the frigi-compression treatment is effected at 0-5 °C under pressure conditions which exert a mechanical effect for re-incorporating water in the flocculated casein micellae, thus ensuring rehydration thereof by causing them to return to the colloidal dispersion state they assumed before flocculation.

12. Process according to Claim 11, characterized in that the frigi-compression treatment is effected by forcing the protein concentrate to flow through a coolant device.

13. Process according to any of Claims 11 and 12, characterized in that the pressure exerted on the protein concentrate is all the more high as the starting milk is more acidic.

14. Process according to any of Claims 1 to 13, characterized in that before the frigi-compression treatment, the proteic concentrate is subjected to a previous preparation step comprising a possible addition of whey for reducing the dry extract thereof, and a softening step.

15. Process according to any of Claims 1 to 14, characterized in that the proteic concentrate is further subjected, previous to frigi-compression, to an air- or bubble-removal step, by joint action of vacuum and of a mechanical effect, notably of centrifugal force, on the curd being processed.

16. Protein-enriched dairy raw material, wherein substantially all the proteins of the starting milk with the exception of casein are in the flocculated state and which, by addition of rennet, will be converted into a cheese substantially without syneresis.

17. Raw material according to Claim 16, presented under the dehydrated form.

18. Application of the dairy raw material according to either Claim 17 or 18 to cheese-making, wherein said material is converted into cheese, substantially without syneresis, by the mere addition of rennet after suitable adjustment of the amounts of fat and other secondary components usually used in cheese-making.

19. Application according to Claim 18, wherein control of the amount of mineralization, especially the content of calcium, in the starting material is effected by adjusting the pH of the starting milk, the casein thereof being kept in the same colloidal suspension form as in the starting milk.

20. Application of the dairy raw material according to either Claim 16 or 17 as an aliment or a dietetic product.

21. Cheeses, especially of the fresh, soft or pressed type, obtained from the dairy raw material according to either Claim 16 or 17, and resulting of the application according to either Claim 18 or 19.

**Claims** (for the Contracting State AT)

1. Process of re-suspending flocculated casein for the obtention of a protein-enriched dairy raw material, characterized in that the milk is subjected to a combined acidifying and heating treatment as to provide a whey and a proteic flocculate (or curd), consisting of casin and/or of seric or whey proteins, in that, after cooling, the curd and whey are separated, the latter containing substantially no milk proteins, while the curd contains substantially all the milk proteins in the flocculated state, in that the curd is subjected to a so-called « frigi-compression » treatment involving a compression step at a pressure exceeding 100 bars and a cooling step to a temperature ranging from 0 to 5 °C, this leading to a liquid protein-concentrated product, wherein the casein in re-suspended.

2. Process according to Claim 1, characterized in that the milk used is of any nature or origin, whole or skimmed, natural or reconstituted, the milk having possibly undergone a previous homogenizing treatment or a heat treatment.

3. Process according to either Claim 1 or 2, characterized in that, in the first step of the method, flocculation of the proteins is effected by heating the milk to about 55-120 °C, under normal pressure, according to the milk acidity, which ranges from pH 4.5 to pH 6.3.

4. Process according to Claim 3, characterized in that the temperature and duration of the heating step decrease as the milk acidity increases.

5. Process according to any of Claims 1 to 4, characterized in that with a mild casein the heating is performed up to 120 °C for a few minutes as to cause concomitant flocculation of the whey proteins and of the casein.

6. Process according to any of Claims 1 to 4, characterized in that the combined acidifying and heating treatment comprises, in the case of an acidic milk, a first heating step affording recovery of a substantially casein-based proteic concentrate, and a second heating step, on the separated whey, affording recovery of the whey proteins, which are subsequently added to the first proteic concentrate.

7. Process according to any of Claims 1 to 4, characterized in that the flocculation of the whey proteins in the milk used is effected, before the acidifying thereof by raising its temperature to 90-95 °C or more for 3 to 5 minutes, following by cooling, acidifying and heating for causing flocculation of the casein.

8. Process according to any of Claims 1 to 7, characterized in that, for effecting the heating treatment in the first stage at temperatures lower than or equal to about 80 °C, use is made of conventional exchangers, while for raising the temperature above 80 °C, use is made of a steam injection or of an exchanger device wherein the milk will flow under low thickness and at a very high speed, particularly in a set of units each including a disk rotating at high speed and a fixed heating surface also of circular shape and very close to the rotating disk.

9. Process according to any of Claims 1 to 8, characterized in that acidifying is effected by addition of an acid or by lactic fermentation.

10. Process according to any of Claims 1 to 9, characterized in that the content of mineral substances, especially calcium, in the concentrate obtained at the end of the process is controlled while enabling, previous to the thermic flocculation, the acidification to be raised up to a predetermined pH.

11. Process according to any of Claims 1 to 10, characterized in that the frigi-compression treatment is effected at 0-5 °C under pressure conditions which exert a mechanical effect for re-incorporating water in the flocculated casein micellae, thus ensuring rehydration thereof by causing them to return to the colloidal dispersion state they assumed before flocculation.

12. Process according to Claim 11, characterized in that the frigi-compression treatment is effected by forcing the protein concentrate to flow through a coolant device.

13. Process according to any of Claims 11 and 12, characterized in that the pressure exerted on the protein concentrate is all the more high as the starting milk is more acidic.

14. Process according to any of Claims 1 to 13, characterized in that before the frigi-compression treatment, the proteic concentrate is subjected to a previous preparation step comprising a possible addition of whey for reducing the dry extract thereof, and a softening step.

15. Process according to any of Claims 1 to 14, characterized in that the proteic concentrate is further subjected, previous to frigi-compression, to an air- or bubble-removal step, by joint action of vacuum and of a mechanical effect, notably of centrifugal force, on the curd being processed.

16. Process according to any of Claims 1 to 15, characterized in that a protein-enriched dairy raw material is prepared, wherein substantially all the proteins of the starting milk are with the exception of casein in the flocculated state and which, by addition of rennet, will be converted into a cheese substantially without syneresis.

17. Process according Claim 16, characterized in that said raw material is dehydrated.

18. Process for making cheeses, especially of the fresh soft or pressed type, characterized in that the dairy raw material obtained by the process of any of Claims 1 to 17 is converted into cheese, said conversion being performed substantially without syneresis, by the mere addition of rennet after suitable adjustment of the amounts of fat and other secondary components usually used in cheese-making.

19. Process according to Claim 18, characterized in that control of the amount of mineralization, especially the content of calcium in the starting material is effected by adjusting the pH of the starting milk, the casein thereof being kept in the same colloidal suspension form as in the starting milk and being liable to be coagulated by rennet.

20. Process of obtaining aliments or dietetic products, consisting to use the dairy raw material obtained according to the process of any of Claims 1 to 19.


**Ansprüche** (für die Vertragsstaaten : BE, CH, DE, FR, GB, IT, LI, LU, NL, SE)

1. Verfahren zum Wiedersuspendieren von ausgeflocktem Kasein zwecks Erzeugung eines an Proteinen angereicherten Milchrohstoffs, dadurch gekennzeichnet, daß man die Milch einer kombinierten Ansäuerungs- und Wärmebehandlung unterzieht, die eine Molke und ein Proteinflockulat (oder Dickmilch) liefert, welches aus Kasein und/oder Molkeproteinen besteht, daß man nach dem Abkühlen die Dickmilch und die Molke trennt, welch letztere praktisch keine Milchproteine enthält, während die Dickmilch praktisch alle Milchproteine im ausgeflockten Zustand enthält, daß man die Dickmilch einer « Kühlkompressionsbehandlung » unterzieht, bei der eine Kompression mit einem Druck über 100 bar und eine Abkühlung auf eine Temperatur von 0 bis 5 °C erfolgt, was zu einem flüssigen, an Proteinen konzentrierten Produkt führt, in dem das Kasein wiedersuspendiert ist.

2. Verfahren nach Anspruch 1, dadurch gekennzeichnet, daß man natürliche oder rekonstituierte Voll- oder Magermilch von beliebiger Art oder beliebigem Ursprung verwendet, die vorher einer Homogenisierungs- oder Wärmebehandlung unterzogen worden sein kann.

3. Verfahren nach Anspruch 1 oder 2, dadurch gekennzeichnet, daß man in der ersten Verfahrensstufe die Ausflockung der Proteine durch Erwärmen der Milch unter Normaldruck auf 55 bis 120 °C entsprechend der Azidität der Milch durchführt, welche zwischen pH 4,5 und pH 6,3 liegt.

4. Verfahren nach Anspruch 3, dadurch gekennzeichnet, daß die Erwärmungstemperatur und -dauer mit steigender Milchazidität abnehmen.

5. Verfahren nach irgendeinem der Ansprüche 1 bis 4, dadurch gekennzeichnet, daß man bei süßem Kasein mehrere Minuten bis auf 120 °C derart erhitzt, daß die Molkeproteine gleichzeitig mit dem Kasein ausflocken.

6. Verfahren nach irgendeinem der Ansprüche 1 bis 4, dadurch gekennzeichnet, daß die kombinierte Ansäuerungs- und Wärmebehandlung im Falle von saurer Milch ein erstes Erwärmen, das die Gewinnung eines Proteinkonzentrats im wesentlichen auf Kaseinbasis ermöglicht, und ein zweites Erwärmen der abgetrennten Molke umfaßt, das die Gewinnung der Molkeproteine ermöglicht, welche anschließend dem ersten Proteinkonzentrat zugesetzt werden.

7. Verfahren nach irgendeinem der Ansprüche 1 bis 4, dadurch gekennzeichnet, daß man die Ausflockung der Molkeproteine in der eingesetzten Milch vor deren Ansäuern durchführt, indem man ihre Temperatur während 3 bis 5 Minuten auf 90 bis 95 °C oder darüber bringt, anschließend abkühlt, ansäuert und erwärmt, um die Ausflockung des Kaseins zu bewirken.

8. Verfahren nach irgendeinem der Ansprüche 1 bis 7, dadurch gekennzeichnet, daß man zur Durchführung der Wärmebehandlung in der ersten Stufe bei Temperaturen unter oder gleich 80 °C traditionelle Wärmeaustauscher anwendet, während man zur Erhöhung der Temperatur über 80 °C eine Wasserdampfinjektion oder einen Wärmeaustauscher anwendet, in dem die Milch in geringer Schichtdicke und mit sehr großer Geschwindigkeit strömt, insbesondere in einer Anordnung von Elementen, von denen jedes eine mit großer Geschwindigkeit drehende Scheibe und eine feste Heizoberfläche aufweist, die ebenfalls kreisförmig ist und sich in sehr geringem Abstand zur Drehscheibe befindet.

9. Verfahren nach irgendeinem der Ansprüche 1 bis 8, dadurch gekennzeichnet, daß man die Ansäuerung durch Säurezusatz oder durch Milchsäuregärung bewirkt.

10. Verfahren nach irgendeinem der Ansprüche 1 bis 9, dadurch gekennzeichnet, daß man den Gehalt des am Ende des Verfahrens erhaltenen Konzentrats an Mineralstoffen, insbesondere Kalzium dadurch regelt, daß man die Ansäuerung vor der thermischen Auflockung bis zu einem vorbestimmten pH laufen läßt.

11. Verfahren nach irgendeinem der Ansprüche 1 bis 10, dadurch gekennzeichnet, daß man die Kühlkompressionsbehandlung zwischen 0 und 5 °C unter Druckbedingungen durchführt, die einen mechanischen Effekt ausüben, um Wasser wieder in die ausgeflockten Kaseinmizellen einzuführen, wodurch deren Rehydratation sichergestellt ist und sie in den kolloidalen Dispersionszustand überführt werden, den sie vor der Ausflockung aufwiesen.

12. Verfahren nach Anspruch 11, dadurch gekennzeichnet, daß man die Kühlkompressionsbehandlung durch Zirkulieren des Proteinkonzentrats unter Druck in einer Kühleinrichtung durchführt.

13. Verfahren nach einem der Ansprüche 11 oder 12, dadurch gekennzeichnet, daß der auf das Proteinkonzentrat ausgeübte Druck um so höher ist, je saurer die Ausgangsmilch ist.

14. Verfahren nach irgendeinem der Ansprüche 1 bis 13, dadurch gekennzeichnet, daß das Proteinkonzentrat vor der Kühlkompressionsbehandlung eine Vorbehandlung erfährt, welche einen eventuellen Molkezusatz zum Verringern seines Trockenextrakts und ein Aufweichen umfaßt.

15. Verfahren nach irgendeinem der Ansprüche 1 bis 14, dadurch gekennzeichnet, daß man ergänzend das Proteinkonzentrat vor der Kühlkompression entlüftet bzw. blasenfrei macht durch Zusammenwirken von Vakuum und mechanischer Bearbeitung, insbesondere Einwirken von Zentrifugalkraft auf die Dickmilch während der Behandlung.

16. Milchrohstoff, der an Proteinen angereichert ist, in dem sich praktisch alle Proteine der Ausgangsmilch mit Ausnahme von Kasein im ausgeflockten Zustand befinden und der sich bei Zusatz von Lab im wesentlichen ohne Synerese in Käse umwandelt.

17. Rohstoff nach Anspruch 16, in entwässerter Form.

18. Verwendung des Milchrohstoffs nach einem der Ansprüche 16 oder 17 bei der Käseherstellung, wobei der Rohstoff im wesentlichen ohne Synerese in Käse überführt wird durch einfache Zugabe von Lab nach geeigneter Einstellung des Gehalts an Fettsubstanz und anderen Nebenkomponenten, die gewöhnlich zur Käseherstellung eingesetzt werden.

19. Verwendung nach Anspruch 18, bei der man durch Regeln des pH der Ausgangsmilch den Mineralgehalt, insbesondere den Kalziumgehalt, des Rohstoffs einstellt, wobei dessen Kasein den kolloidalen Suspensionszustand beibehält, den es in der Ausgangsmilch aufwies.

20. Verwendung des Milchrohstoffs nach einem der Ansprüche 16 oder 17 als Nahrungsmittel oder diätetisches Produkt.

21. Käse, insbesondere Frischkäse, Weichkäse oder Presskäse, erhalten ausgehend von dem Milchrohstoff nach einem der Ansprüche 16 oder 17 und entstehend bei der Verwendung nach einem der Ansprüche 18 oder 19.


**Ansprüche** (für den Vertragsstaat AT)

1. Verfahren zum Wiedersuspendieren von ausgeflocktem Kasein zwecks Erzeugung eines an Proteinen angereicherten Milchrohstoffs, dadurch gekennzeichnet, daß man die Milch einer kombinierten Ansäuerungs- und Wärmebehandlung unterzieht, die eine Molke und ein Proteinflockulat (oder Dickmilch) liefert, welches aus Kasein und/oder Molkeproteinen besteht, daß man nach dem Abkühlen die Dickmilch und die Molke trennt, welch letztere praktisch keine Milchproteine enthält, während die Dickmilch praktisch alle Milchproteine im ausgeflockten Zustand enthält, daß man die Dickmilch einer « Kühlkompressionsbehandlung » unterzieht, bei der eine Kompression mit einem Druck über 100 bar und eine Abkühlung auf eine Temperatur von 0 bis 5 °C erfolgt, was zu einem flüssigen, an Proteinen konzentrierten Produkt führt, in dem das Kasein wiedersuspendiert ist.

2. Verfahren nach Anspruch 1, dadurch gekennzeichnet, daß man natürliche oder rekonstituierte Voll- oder Magermilch von beliebiger Art oder beliebigem Ursprung verwendet, die vorher einer Homogenisierungs- oder Wärmebehandlung unterzogen worden sein kann.

3. Verfahren nach Anspruch 1 oder 2, dadurch gekennzeichnet, daß man in der ersten Verfahrensstufe die Ausflockung der Proteine durch Erwärmen der Milch unter Normaldruck auf 55 bis 120 °C entsprechend der Azidität der Milch durchführt, welche zwischen pH 4,5 und pH 6,3 liegt.

4. Verfahren nach Anspruch 3, dadurch gekennzeichnet, daß die Erwärmungstemperatur und -dauer mit steigender Milchazidität abnehmen.

5. Verfahren nach irgendeinem der Ansprüche 1 bis 4, dadurch gekennzeichnet, daß man bei süßem Kasein mehrere Minuten bis auf 120 °C derart erhitzt, daß die Molkeproteine gleichzeitig mit dem Kasein ausflocken.

6. Verfahren nach irgendeinem der Ansprüche 1 bis 4, dadurch gekennzeichnet, daß die kombinierte Ansäuerungs- und Wärmebehandlung im Falle von saurer Milch ein erstes Erwärmen, das die Gewinnung eines Proteinkonzentrats im wesentlichen auf Kaseinbasis ermöglicht, und ein zweites Erwärmen der abgetrennten Molke umfaßt, das die Gewinnung der Molkeproteine ermöglicht, welche anschließend dem ersten Proteinkonzentrat zugesetzt werden.

7. Verfahren nach irgendeinem der Ansprüche 1 bis 4, dadurch gekennzeichnet, daß man die Ausflockung der Molkeproteine in der eingesetzten Milch vor deren Ansäuern durchführt, indem man ihre Temperatur während 3 bis 5 Minuten auf 90 bis 95 °C oder darüber bringt, anschließend abkühlt, ansäuert und erwärmt, um die Ausflockung des Kaseins zu bewirken.

8. Verfahren nach irgendeinem der Ansprüche 1 bis 7, dadurch gekennzeichnet, daß man zur Durchführung der Wärmebehandlung in der ersten Stufe bei Temperaturen unter oder gleich 80 °C traditionelle Wärmeaustauscher anwendet, während man zur Erhöhung der Temperatur über 80 °C eine Wasserdampfinjektion oder einen Wärmeaustauscher anwendet, in dem die Milch in geringer Schichtdicke und mit sehr großer Geschwindigkeit strömt, insbesondere in einer Anordnung von Elementen, von denen jedes eine mit großer Geschwindigkeit drehende Scheibe und eine feste Heizoberfläche aufweist, die ebenfalls kreisförmig ist und sich in sehr geringem Abstand zur Drehscheibe befindet.

9. Verfahren nach irgendeinem der Ansprüche 1 bis 8, dadurch gekennzeichnet, daß man die Ansäuerung durch Säurezusatz oder durch Milchsäuregärung bewirkt.

10. Verfahren nach irgendeinem der Ansprüche 1 bis 9, dadurch gekennzeichnet, daß man den Gehalt des am Ende des Verfahrens erhaltenen Konzentrats an Mineralstoffen, insbesondere Kalzium, dadurch regelt, daß man die Ansäuerung vor der thermischen Ausflockung bis zu einem vorbestimmten pH laufen läßt.

11. Verfahren nach irgendeinem der Ansprüche 1 bis 10, dadurch gekennzeichnet, daß man die Kühlkompressionsbehandlung zwischen 0 und 5 °C unter Druckbedingungen durchführt, die einen mechanischen Effekt ausüben, um Wasser wieder in die ausgeflockten Kaseinmizellen einzuführen, wodurch deren Rehydratation sichergestellt ist und sie in den kolloidalen Dispersionszustand überführt werden, den sie vor der Ausflockung aufwiesen.

12. Verfahren nach Anspruch 11, dadurch gekennzeichnet, daß man die Kühlkompressionsbehandlung durch Zirkulieren des Proteinkonzentrats unter Druck in einer Kühleinrichtung durchführt.

13. Verfahren nach einem der Ansprüche 11 oder 12, dadurch gekennzeichnet, daß der auf das Proteinkonzentrat ausgeübte Druck um so höher ist, je saurer die Ausgangsmilch ist.

14. Verfahren nach irgendeinem der Ansprüche 1 bis 13, dadurch gekennzeichnet, daß das Proteinkonzentrat vor der Kühlkompressionsbehandlung eine Vorbehandlung erfährt, welche einen eventuellen Molkezusatz zum Verringern seines Trockenextrakts und ein Aufweichen umfaßt.

15. Verfahren nach irgendeinem der Ansprüche 1 bis 14, dadurch gekennzeichnet, daß man ergänzend das Proteinkonzentrat vor der Kühlkompression entlüftet bzw. blasenfrei macht durch Zusammenwirken von Vakuum und mechanischer Bearbeitung, insbesondere Einwirken von Zentrifugalkraft auf die Dickmilch während der Behandlung.

16. Verfahren nach irgendeinem der Ansprüche 1 bis 15, dadurch gekennzeichnet, daß man einen an Proteinen angereicherten Milchrohstoff herstellt, in dem sich praktisch alle Proteine der Ausgangsmilch mit Ausnahme von Kasein in ausgeflocktem Zustand befinden und der sich bei Zugabe von Lab im wesentlichen ohne Synerese in Käse umwandelt.

17. Verfahren nach Anspruch 16, dadurch gekennzeichnet, daß man den Milchrohstoff entwässert.

18. Verfahren zur Herstellung von Käse, insbesondere Frischkäse, Weichkäse oder Presskäse, dadurch gekennzeichnet, daß man einen Milchrohstoff, der nach dem Verfahren irgendeines der Ansprüche 1 bis 17 erhalten worden ist, in Käse umwandelt, wobei diese Umwandlung im wesentlichen ohne Synerese durch einfache Zugabe von Lab nach geeigneter Einstellung des Gehalts an Fettsubstanz und anderen Nebenbestandteilen, die gewöhnlich zur Käseherstellung eingesetzt werden, erfolgt.

19. Verfahren nach Anspruch 18, dadurch gekennzeichnet, daß man durch Regeln des pH der Ausgangsmilch den Mineralgehalt, insbesondere den Kalziumgehalt, des Rohstoffs einstellt, wobei dessen Kasein der kolloidalen Suspensionszustand beibehält, den es in der Ausgangsmilch aufwies, und befähigt ist, durch Lab koaguliert zu werden.

20. Verfahren zur Herstellung von Nahrungsmitteln oder diätetischen Produkten, bestehend aus der Verwendung des Milchrohstoffs, der erhalten worden ist nach dem Verfahren irgendeines der Ansprüche 1 bis 19.

Circuit lait floculé ou à floculer
Circuit sérum ou solution d'acide
Circuit concentré de protéines